# EUROPÄISCHE PATENTSCHRIFT

(11) **EP 2 107 589 B1**
(45) Veröffentlichungstag und Bekanntmachung des Hinweises auf die Patenterteilung: **16.05.2012**
(21) Anmeldenummer: 08006585.7
(22) Anmeldetag: 31.03.2008
(51) Int. Cl.: H01H 85/00, H05K 5/00, H02J 3/38, H02M 7/00, G01R 31/07

(54) **Schaltungsvorrichtung zur Erdung eines Wechselrichters**
Switching device for grounding an inverter
Dispositif de commutation destiné à la mise à la terre d'un onduleur

(43) Veröffentlichungstag der Anmeldung: 07.10.2009
(60) Teilanmeldung: 11185109.3
(73) Patentinhaber: SMA Solar Technology AG, 34266 Niestetal (DE)
(72) Erfinder: Gebert, Bernd, 34121 Kassel (DE)
(74) Vertreter: Walther, Walther & Hinz GbR

(56) Entgegenhaltungen:
- EP-A- 0 342 101
- DE-A1- 3 233 862
- DE-A1- 19 933 566
- FR-A- 2 309 121
- GB-A- 2 436 403
- US-B1- 6 686 744
- SMA TECHNOLOGIE AG: "Sunny Boys & Co: Für jedes Modul die passende Lösung" SUNNY BOY INFO, [Online] Bd. 2007, Nr. 02, Juni 2007 (2007-06), Seiten 4-5, XP002495222 Niestetal Gefunden im Internet: URL:http://download.sma.de/smaprosa/dateie n/1371/SBINFO37-11-AD2207.pdf> [gefunden am 2008-09-09]
- CONRAD ELECTRONIC GMBH: "Hauptkatalog 2006" CONRAD HAUPTKATALOG, Bd. 2005/2006, 2005, Seite 640,646,1099,1100, XP002495223 Hirschau

## Beschreibung

Die Erfindung betrifft eine Schaltungsvorrichtung zur Erdung eines Photovoltaik-Wechselrichters, der eine Gleichspannung in eine netzfrequente Wechselspannung wandelt, mit einem Wechselrichtergehäuse und mit einer Schmelzsicherung, die eine positive oder negative Gleichspannung eines Photovoltaikgenerators mit einem Erdungsanschluss verbindet.

Es ist bekannt, Photovoltaik-Wechselrichter mit einer sogenannten GFDI (Ground Fault Detection and Interruption)-Schmelzsicherung im Gerät auszustatten. Durch diese Sicherung kann ein Strom mittels eines Stromwandlers überwacht werden. Sobald dieser Strom einen Grenzwert überschreitet, wird das Gerät vom Netz getrennt. Wenn der Strom anhält, wird ein Strompfad dadurch unterbrochen, dass die Schmelzsicherung durchbrennt. Der Wechselrichter kann signalisieren, dass ein Fehlerstrom, zum Beispiel größer als 1 A geflossen ist, und schaltet nicht wieder auf das Netz zu, solange der Fehler nicht behoben ist und die Sicherung ausgetauscht wurde.

Die verwendeten Schaltungen haben den Nachteil, dass ein ungewollter harter Erdschluss auf der bereits durch die Sicherung geerdeten Seite nur durch den Installateur mittels eines Messgerätes erkannt werden kann. Es kann vorkommen, dass die Sicherung beim Aufschalten des Wechselrichters an die Photovoltaikanlage sofort durchbrennt, die Anlage aber nicht erkennt, dass die Sicherung durchgebrannt ist, da keine automatische Unterscheidung zwischen einem gewollten und ungewollten harten Erdschluss möglich ist.

In den Kontinenten bzw. Ländern bestehen unterschiedliche Vorschriften bezüglich der GFDI-Schmelzsicherung sowie der Erdung von Photovoltaikgeneratoren. Möglich ist nämlich, die positive oder die negative Generatorspannung zu erden. Beispielsweise wird in den USA eine GFDI (Ground Fault Detection and Interruption)-Schmelzsicherung gefordert.

Für Geräte, die für die USA vorgesehen sind, wird die Sicherung standardmäßig entweder auf die negative oder die positive Seite auf den Erdungsanschluss PE geklemmt. Bekannt ist daher, dass mit Hilfe einer Sicherung eine Verbindung zwischen dem positiven oder negativen Generatoranschluss und dem Erdungsanschluss PE hergestellt werden kann.

Bekannt ist darüber hinaus, die Sicherung innerhalb des Wechselrichtergehäuses unterzubringen und wahlweise die positive oder negative Generatorspannung über die Sicherung durch einen Umsteckvorgang zu erden. Hilfreich ist hierbei ein sogenannter Jumper, der als eine Art Kurzschlussstecker auf Kontakte von Stiftleisten gesteckt wird und verschiedene Pins einer Stiftleiste elektrisch miteinander verbindet. Eine Änderung der Erdungsart erfordert das Öffnen eines Gehäusedeckels. Weil Photovoltaikwechselrichter häufig einen hohen Schutz bezüglich Berührung- und Wasser aufweisen, viele erfüllen z. B. die Schutzart IP-65 nach DIN. EN 60529 (IEC 529NDE 047 T1) ist das Ändern und Austauschen der Sicherung umständlich.

In diesem Zusammenhang sind in "SMA Technologie AG: "Sunny Boys & Co.: Für jedes Modul die passende Lösung°, SUNNY BOY INFO, [Online] Bd. 2007, Nr. 02, Juni 2007 (2007-06), Seiten 4-5, XP002495222 Niestetal" Erdungssets beschrieben, die eine negative oder eine positive Erdung ermöglichen, wobei auch hier die Erdung intern, also im Wechselrichter erfolgt. Der nachträgliche Einbau dieses Erdungssets erfordert somit das Öffnen des Wechselrichtergehäuses.

Aus der GB 24 36 403 A ist eine vom Wechselrichtergehäuse getrennte Erdungseinheit vorgesehen, wobei auch nicht die wahlweise Erdung auf eine positive oder negative Gleichspannung gezeigt ist.

Aus dem Katalog "CONRAD ELECTRONIC GMBH: "Hauptkatalog 2006" CONRAD HAUPTKATALOG, Bd. 2005/2006, 2005, Seite 640,646,1099,1100, XP002495223 Hirschau" ist sowohl ein Solarladeregler als auch ein Tiefentlade-Schutz mit Ladezustandsanzeige bekannt, die eine von außen aufsteckbare, nicht geschützte Schmelzsicherung zeigen. Des Weiteren sind dem Katalog verschiedene Temperatursicherungen, Temperaturwächter, Bimetallschalter, Überstrom-Schutzschalter und Kfz-Sicherungsadapter entnehmbar. Unter anderem sind auch Sicherungshalter dem Katalog entnehmbar.

Bekannt sind Wechselrichter mit einer Sicherung zur Erdung des Solargenerators.

Der Erfindung liegt die Aufgabe zugrunde, eine Schaltungsvorrichtung der genannten Art zu schaffen, mit der ein Installateur die Möglichkeit hat, mit geringem Aufwand einen Wechselrichter auf Wunsch positiv oder negativ zu erden, wobei der IP-65 Bereich des Gerätes verschlossen bleiben kann. Ob der Wechselrichter positiv oder negativ geerdet wird, ist abhängig von der Art der zum Aufbau des Solargenerators verwendeten Solarzellen.

Darüber hinaus soll die Vorrichtung so ausgeführt sein, dass ein Kunde die Möglichkeit hat, den Wechselrichter entsprechend dem verwendeten Solargenerator nachträglich zu erden, wobei eine Messung des Isolationswiderstandes Riso möglich ist, um auch eine GFDI Funktion erfüllen zu können, um so den Zustand der Sicherung feststellen zu können.

Diese Aufgabe wird dadurch gelöst, dass am Wechselrichtergehäuse eine von außen zugängliche und von außen aufsteckbare insbesondere berührgeschützte Schmelzsicherung angeordnet ist, die wahlweise auf eine positive oder negative Gleichspannung derart kontaktierbar ist, dass entweder eine positive oder negative Gleichspannung über die Schmelzsicherung geerdet wird, dass die Schmelzsicherung in einem außerhalb des Wechselrichtergehäuses steckbaren Steckkontaktteil mit wenigsten drei Steckkontakten angeordnet und zwischen zwei der Kontakte geschaltet ist, wobei am Wechselrichtergehäuse wenigstens drei mit dem Steckkontaktteil korrespondierende Gegenkontakte vorhanden sind, und zwar für die positive, die negative Gleichspannung und den Erdungsanschluss, wobei das Steckkontaktteil derart umsteckbar ausgeführt ist, dass entweder die positive oder die negative Gleichspannung geerdet wird, dass das Steckkontaktteil eine elektrische und/oder mechanische Steckcodierung aufweist.

Durch die erfindungsgemäße Schmelzsicherung kann der Deckel des Gerätes verschlossen bleiben, wobei unterschiedliche Erdungen leicht realisierbar sind.

Zudem ist eine Messung des Isolationswiderstandes Riso möglich, um den Zustand der Sicherung zu überprüfen. Hierbei gilt, dass in den Fällen, wo die Sicherung fehlt, herausgefunden werden kann, ob ein Isolationsfehler in dem Messfeld vorhanden ist.

Sowohl die Riso Messung als auch die Sicherung sind Komponenten einer Schaltung für eine GFDI (Ground Failure Detection and Interruption) Überwachung.

Weitere vorteilhafte Ausgestaltungen der Erfindung sind in den Unteransprüchen gekennzeichnet.

Die Schmelzsicherung ist in einem außerhalb des Wechselrichtergehäuses steckbaren Steckkontaktteil mit wenigstens drei Steckkontakten angeordnet und zwischen zwei der Kontakte geschaltet, wobei am Wechselrichtergehäuse wenigstens drei mit dem Steckkontaktteil korrespondierende Gegenkontakte vorhanden sind, und zwar für die positive, die negative Gleichspannung und den Erdungsanschluss, wobei das Steckkontaktteil derart umsteckbar ausgeführt ist, dass entweder die positive oder die negative Gleichspannung geerdet wird. Zweckmäßigerweise sind die Steckkontakte der Sicherung als Steckstifte ausgeführt und die des Gerätes als Buchsen. So können beispielsweise drei Kontakte über- oder nebeneinander angeordnet sein. Dadurch lässt sich der Sicherungs-Stecker einfach um 180° drehen und stecken, um eine Änderung der Erdung von positiv auf negativ und umgekehrt zu erreichen.

Eine mechanische Codierung kann beispielsweise durch Codierungsstifte oder ähnliches geschaffen werden. Eine elektrische Codierung der Steckrichtung kann durch eine in Reihe zur Sicherung angeordnete zusätzliche Diode bewerkstelligt werden, die zusätzlich in dem Becher integriert ist. Hierdurch ergeben sich zwei zusätzliche Kontakte. Durch die Kontakte kann die Flussrichtung der Diode ausgewertet werden, um zu ermitteln, ob die positive oder die negative Seite des Generators geerdet ist.

Besonders vorteilhaft ist es, dass die Schmelzsicherung in einem becherartigen Teil eingebettet ist, der die drei Steckkontakte trägt. Dadurch lässt sich ein hohe Schutzart, zum Beispiel IP-65 einfach umsetzen. Eine Dichtung kann in einfacher Weise zwischen dem Becher und dem Wechselrichtergehäuse platziert werden. So kann in dem Wechselrichtergehäuse die Buchse angebracht werden, die insbesondere sowohl eine Codierung, ob positiv oder negativ geerdet werden soll, abfragt als auch den Kontakt zur Erdungs-Sicherung herstellt. Es ist praktisch ein Becher mit dem Gegenstück zur Buchse vorhanden, der die Sicherung enthält, der aber in zwei Richtungen aufgesteckt werden kann. Die erste Steckrichtung wäre die positive Erdung, die zweite Richtung die negative Erdung. Der Becher kann im Querschnitt kreisförmig, flach abgerundet sein oder eine andere Form aufweisen. Zudem bietet die Becherlösung den Vorteil, dass die Sicherung leicht ausgewechselt werden kann.

Ein Ausführungsbeispiel wird anhand der Zeichnungen näher erläutert, wobei weitere vorteilhafte Weiterbildungen der Erfindung und Vorteile derselben beschrieben sind. Es zeigen:
- Fig. 1: eine schematische Darstellung eines Photovoltaikwechselrichters,
- Fig. 2: eine Darstellung einer ersten Schaltungsvariante einer erfindungsgemäßen Vorrichtung,
- Fig. 3: eine vergrößerte Prinzipdarstellung eines Sicherungssteckteils,
- Fig. 4: eine vergrößerte perspektivische Darstellung eines in Fig. 3 gezeigten Sicherungssteckteils,
- Fig. 5: eine Darstellung einer zweiten Schaltungsvariante der Vorrichtung,
- Fig. 6: eine Darstellung einer dritten Schaltungsvariante der Vorrichtung,
- Fig. 7: eine Darstellung einer vierten Schaltungsvariante der Vorrichtung, und
- Fig. 8: eine Übersicht der Eigenschaften der gezeigten Vorrichtungen in Tabellenform.

In den Figuren sind gleiche Teile mit denselben Bezugszeichen versehen.

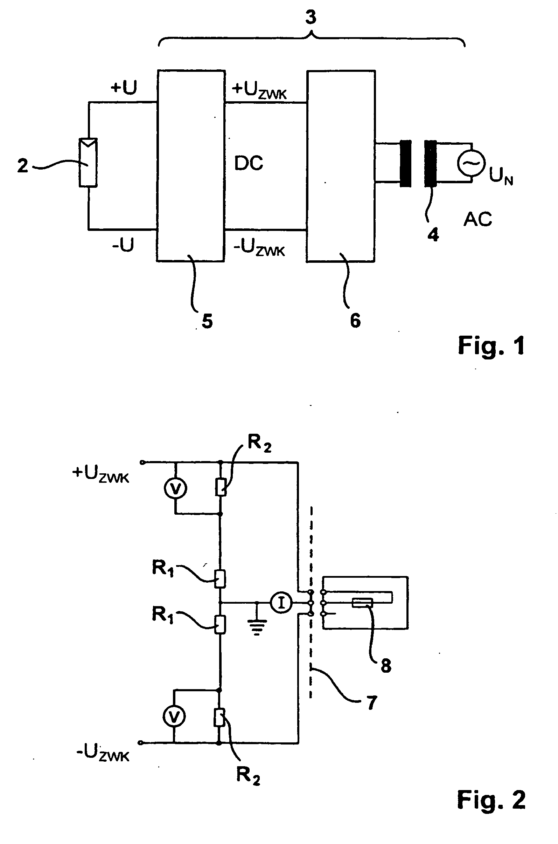

Fig. 1 zeigt eine Photovoltaikanlage 1 mit einem Photovoltaikgenerator 2, einem Wechselrichter 3 mit einem Transformator 4 zur galvanischen Trennung zwischen der DC Seite und der AC- bzw. Netzseite. Der Wechselrichter kann als Stringwechselrichter oder als Einzelwechselrichter ausgeführt sein. Es sind die Gleichspannungen +U und-U vorhanden.

Der Wechselrichter 3 kann einen Hochsetz- und/oder Tiefsetzsteller 5 umfassen. Eine Brückenschaltung 6 mit Halbleiterschaltelementen dient als DC/AC-Wandlerschaltung. Der Wechselrichter 3 wandelt die Gleichspannung +U / -U in eine netzfrequente Wechselspannung U_{N} mit z.B. 110/220/380 V und 50/60 Hz. Der Wechselrichter 3 kann eine Impulsweitensteuerung sowie eine MPP-Regelung haben.

Der Generator 2 kann auf der positiven oder negativen Seite geerdet werden.

Fig. 2 zeigt eine Schaltungsvorrichtung zur Erdung des Wechselrichters 3 bzw. des Generators 2. Der Wechselrichter 3 umfasst ein Wechselrichtergehäuse, das mit dem Bezugszeichen 7 angedeutet ist. Eine Schmelzsicherung 8 verbindet die eine positive oder negative Gleichspannung + Uzwk, -Uzwk mit einem Erdungsanschluss PE.

Erfindungsgemäß ist am Wechselrichtergehäuse 7 die von außen zugängliche und von außen aufsteckbare Schmelzsicherung 8 angeordnet. Die Sicherung 8 ist wahlweise auf eine positive oder negative Gleichspannung derart kontaktierbar, dass entweder die positive oder negative Gleichspannung über die Schmelzsicherung 8 geerdet wird, also mit PE verbunden ist.

Weiterhin umfasst die Schaltung nach Fig. 2 eine Überwachungseinheit zur Überwachung eines durch die Schmelzsicherung fließenden Fehlerstromes, insbesondere eines ungewollten harten Erdschlusses. Die Schaltung besteht aus jeweils zwei Spannungsteilern (R₁, R₂), die von +Uzwk und -Uzwk gegen Erde geschaltet sind. Durch die Spannungsmessung an R2 kann beispielsweise ermittelt werden, ob die Sicherung 8 vorhanden ist, wobei, wenn die Sicherung vorhanden ist, die Spannung auf der geerdeten Seite 0 beträgt. Im Fall eines harten Erdungsfehlers, also bei Durchschmelzen der Sicherung, wird die Spannung von PE auf ein Potential steigen, was spannungsmäßig zwischen den Solargeneratoren liegt, es findet also eine Spannungsaufteilung zwischen den Solargeneratoren statt.

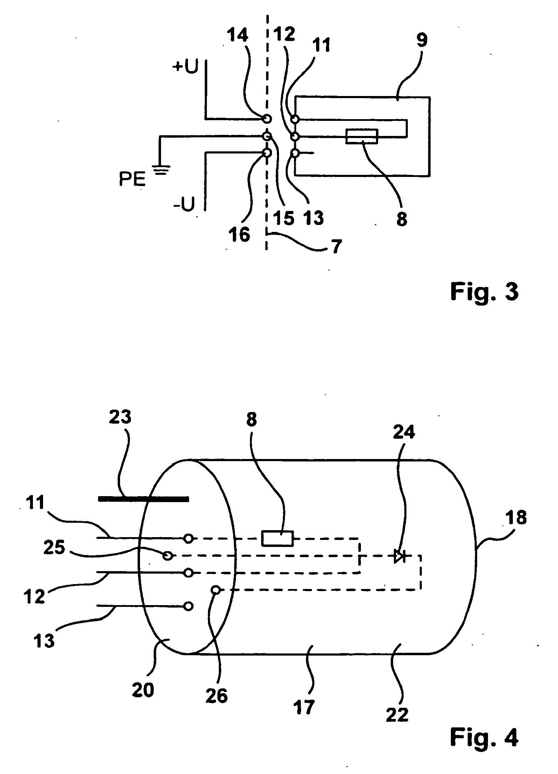

Wie Fig. 3 veranschaulicht, ist die Schmelzsicherung 8 vorzugsweise in einem außerhalb des Wechselrichtergehäuses 7 steckbaren Steckkontaktteil 9 mit drei Steckkontakten 11, 12, 13 zwischen den Kontakten 11 und 12 angeordnet. Am Wechselrichtergehäuse 7 sind drei mit dem Steckkontaktteil 9 korrespondierende Gegenkontakte 14, 15, 16 vorhanden. Die Gegenkontakte 14, 15, 16 sind mit der positiven Gleichspannung +U dem Erdungsanschluss PE und der negativen Gleichspannung-U verbunden.

Das Steckkontaktteil 9 ist derart umsteckbar ausgeführt, dass entweder die positive oder die negative Gleichspannung +U / -U über die Sicherung 8 geerdet wird.

Insbesondere ist die Schmelzsicherung 8 in einem becherartigen Teil 17 eingebettet ist, der die drei Steckkontakte 11, 12, 13 trägt. Diese sind als Stecker ausgeführt, die in Buchsen am Gehäuse 7 greifen.

Das becherartige Teil 17 bzw. der Becher hat zum Beispiel eine zylindrische Form, die zumindest aber auch teilweise konisch verlaufen kann. Der Becher hat einen geschlossenen Becherboden 18 und einen loslösbaren Becherdeckel 20, der die Steckkontakte 11, 12, 13 führt. Andere Ausführungen, wie rechteckige Ausführungen des Steckkontaktteils 9 sind auch möglich. Das Steckkontaktteil 9 hat zumindest ein Gehäuse 22 für die Sicherung 8, das z.B. die Schutzart IP-65 erfüllt. Diese ist über den Deckel 20 zugänglich.

Das Steckkontaktteil 9 kann so gesteckt werden, dass entweder der erste Steckkontakt 11 mit dem ersten Gegenkontakt 14 zusammentrifft oder der Steckkontakt 11 mit dem dritten Gegenkontakt 16 zusammentrifft. Hierzu muss er nur gedreht werden. Dadurch ist die Erdung auf positive oder negative Spannung wählbar, ohne dass ein Deckel des Wechselrichters 3 geöffnet werden muss.

Wie Fig. 4 zeigt, hat das Steckkontaktteil 9 mindestens eine mechanische Steckkodierung 23 und/oder eine elektrische Kodierung durch Kontakte 25, 26. Die elektrische Kodierung 25, 26 umfasst eine Diode 24, um die positive oder negative Erdung zu erkennen. Hierzu sind Kontakte 25, 26 im Becher vorgesehen. Durch die Kontakte wird die Flussrichtung der Diode ausgewertet, die erkennen lässt, ob die positive oder negative Seite des Generators geerdet ist. Bei der mechanischen Codierung, die durch einen Zapfen 23 mit einer korrespondierenden Öffnung am Gehäuse 7 geschaffen werden kann, ist das Steckkontaktteil 9 nur in zwei definierte Positionen steckbar.

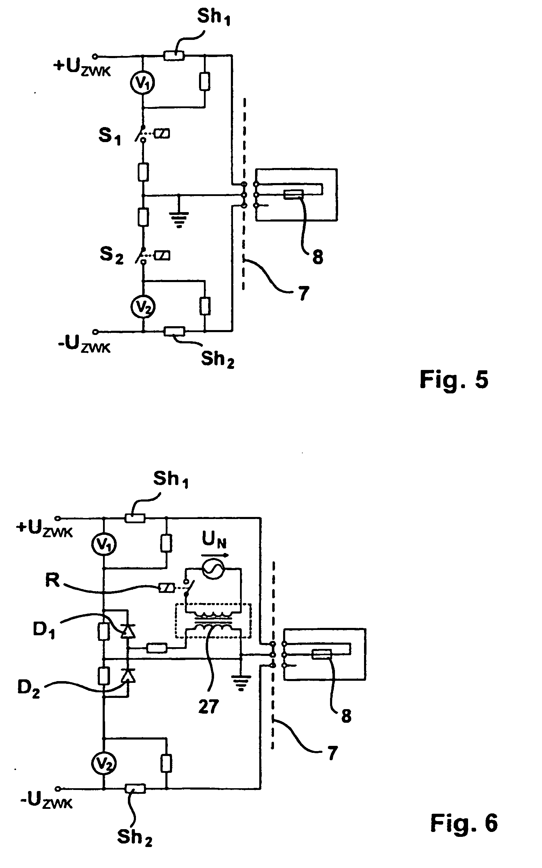

Die Fig. 5 zeigt eine Schaltungsvariante, mit der eine präzise Messung des Isolationswiderstandes möglich ist und die einen Erdschluss des Generators 2 erkennt, insbesondere sind zwei Shunts Sh1, Sh2 vorhanden, wobei der erste Shunt Sh1 an dem positiven Strompfad liegt und der zweite Shunt Sh2 am negativen Strompfad liegt. Diese dienen der indirekten Sicherungsstrommessung. Der Strom, welcher die Widerstände Sh1 und Sh2 durchströmt, führt zu einer Spannungserhöhung an V1 bzw. V2. Die Schalter S1 und S2 dienen der präzisen Messung des Isolationswiderstandes Riso. Der erste Schalter S1 liegt zwischen der positiven Gleichspannung +Uzwk und dem Erdungsanschluss PE und der zweite Schalter S2 liegt zwischen der negativen Gleichspannung -Uzwk und dem Erdungsanschluss PE. Im ersten Messzustand bzw. Messschritt ist der Schalter S1 offen und der Schalter S2 zu und im zweiten Messzustand bzw. Messschritt ist der Schalter S2 offen und der Schalter S1 zu. Die Schalter sind steuerbare Schalter, zum Beispiel Relais.

Gemäß Figur 6 wird eine Wechselspannung über einen Transformator 27 eingekoppelt. Der Strom wird über Dioden D1 und D2 aufgeteilt, die jeweils unterschiedliche Halbwellen führen. Die Wechselspannung kann die Netzspannung U_{N} sein. Die Wechselspannung kann über einen steuerbaren Schalter, z.B. ein Relais R, zuschaltbar sein. Die Spannungsteiler gemäß Fig. 2 werden beibehalten. Dadurch wird der Strom durch die Sicherung 8 überwacht.

Bei der dritten Schaltungsvariante gemäß Fig. 6 ist es möglich, außerdem zwischen einem gewollten und ungewollten Erdschluss zu unterscheiden. Hier kann eine defekte Sicherung immer erkannt werden. Im Falle eines harten Erdfehlers auf der bereits geerdeten Seite wird die Sicherung noch vor einem Aufschalten durchbrennen. Die Schaltung umfasst die Shunts Sh1 und Sh2 gemäß Fig. 5 und die Spannungsteiler gemäß Fig. 2.

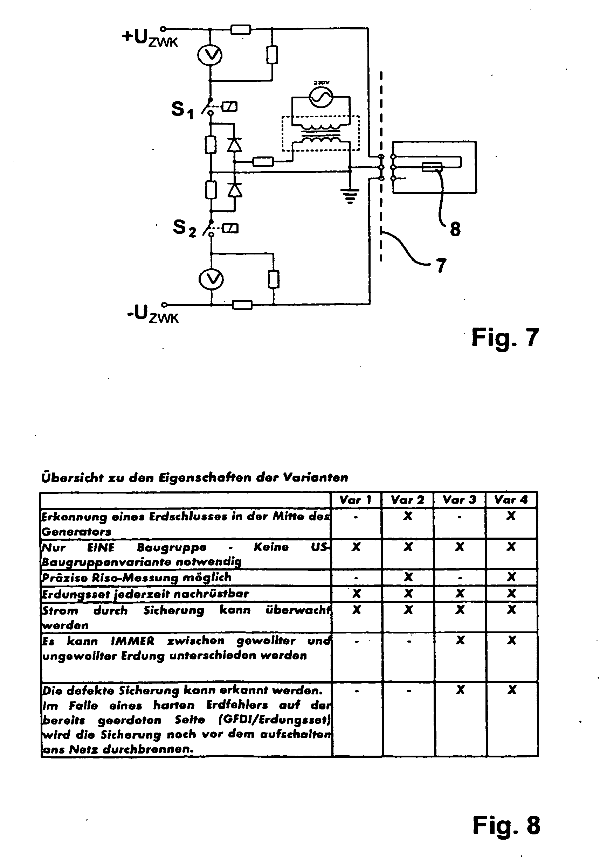

Die Ausführungsform gemäß Fig. 7 ist eine Kombination der Schaltungen gemäß Fig. 6 und Fig. 5.

In Fig. 8 sind die Eigenschaften der jeweiligen Schaltungsvarianten gemäß Fig. 2 (Var 1), Fig. 5 (Var 2), Fig. 6 (Var 3), Fig. 7 (Var 4) in Tabellenform zusammengefasst.

Der Photovoltaik-Wechselrichter 3 kann durch die Erfindung mit einer GFDI-Schmelzsicherung im Gerät ausgestattet werden. Durch diese Sicherung kann ein Strom mittels des Stromwandlers überwacht werden. Sobald dieser Strom einen Grenzwert überschreitet, wird der Wechselrichter 3 vom Netz getrennt. Wenn der Strom anhält, wird ein Strompfad dadurch unterbrochen, dass die Schmelzsicherung 8 durchbrennt. Der Wechselrichter 3 kann signalisieren, dass ein Fehlerstrom zum Beispiel größer als 1 A geflossen ist, und schaltet nicht wieder auf das Netz zu, solange der Fehler nicht behoben ist und die Sicherung ausgetauscht wurde.

Die in Fig. 6 und in Fig. 7 dargestellten verwendeten Schaltungen haben den Vorteil, dass ein ungewollter harter Erdschluss auf der bereits durch die Sicherung geerdeten Seite nicht mehr mit einem zusätzlichen Messgerät gemessen werden muss. Es kann nicht mehr vorkommen, dass die Sicherung beim Aufschalten des Wechselrichters an die Photovoltaikanlage sofort durchbrennt, die Anlage aber nicht erkennt, dass die Sicherung durchgebrannt ist. Es ist immer eine automatische Unterscheidung zwischen einem gewollten und ungewollten harten Erdschluss möglich.

Durch die Erfindung können Vorschriften, insbesondere in den USA erfüllt werden. Dort wird eine GFDI-Schmelzsicherung sowie die Erdung von Photovoltaikgeneratoren gefordert. Möglich ist auch sowohl die positive als auch die negative Generatorspannung zu erden.

Die Erfindung ist nicht auf dieses Beispiel beschränkt, so kann die Sicherung auf eine andere Weise als in einem Becherteil von außen kontaktierbar sein.

Auch kann jedes beschriebene oder gezeigte Einzelmerkmal mit jedem anderen Merkmal kombiniert werden.

### BEZUGSZEICHENLISTE

- 1: Photovoltaikanlage
- 2: Photovoltaikgenerator
- 3: Wechselrichter
- 4: Transformator
- 5: Hochsetz- oder Tiefsetzsteller
- 6: Brückenschaltung
- 7: Wechselrichtergehäuse
- 8: Schmelzsicherung
- 9: Steckkontaktteil
- 10: -
- 11, 12, 13: Steckkontakte
- 14, 15, 16: Gegenkontakte
- 17: becherartiges Teil
- 18: Becherboden
- 19: -
- 20: Becherdeckel
- 21: -
- 22: Gehäuse
- 23: Steckkodierung
- 24: Elektrische Kodierung
- 25: Mechanische Steckkodierung
- 26: Zapfen
- 27: Stromwandler

## Patentansprüche

1. Schaltungsvorrichtung zur Erdung eines Photovoltaik-Wechselrichters (3), der eine Gleichspannung in eine netzfrequente Wechselspannung wandelt, mit einem Wechselrichtergehäuse (7) und mit einer Schmelzsicherung (8), die eine positive oder negative Gleichspannung eines Photovoltaikgenerators (2) mit einem Erdungsanschluss verbindet,
**dadurch gekennzeichnet,**
- **dass** am Wechselrichtergehäuse (7) eine von außen zugängliche und von außen aufsteckbare Schmelzsicherung (8) angeordnet ist, die wahlweise auf eine positive oder negative Gleichspannung derart kontaktierbar ist, dass entweder eine positive oder negative Gleichspannung über die Schmelzsicherung (8) geerdet wird,
- **dass** die Schmelzsicherung (8) in einem außerhalb des Wechselrichtergehäuses (7) steckbaren Steckkontaktteil (9) mit wenigstens drei Steckkontakten (11, 12, 13) angeordnet und zwischen zwei der Kontakte geschaltet ist, wobei am Wechselrichtergehäuse (7) wenigstens drei mit dem Steckkontaktteil (9) korrespondierende Gegenkontakte (14, 15, 16) vorhanden sind, und zwar für die positive, die negative Gleichspannung und den Erdungsanschluss, wobei das Steckkontaktteil (9) derart umsteckbar ausgeführt ist, dass entweder die positive oder die negative Gleichspannung geerdet wird,
- **dass** das Steckkontaktteil (9) eine elektrische und/oder mechanische Steckcodierung (24, 25, 26; 23) aufweist.

2. Schaltungsvorrichtung nach Anspruch 1,
**dadurch gekennzeichnet,**
**dass** die Schmelzsicherung (8) in einem becherartigen Teil (17) eingebettet ist, der die drei Steckkontakte (11, 12, 13) trägt.

3. Schaltungsvorrichtung nach Anspruch 1,
**dadurch gekennzeichnet,**
**dass** die elektrische Codierung Kontakte (25, 26) umfasst sowie eine Diode (24), um die positive oder negative Erdung zu erkennen.

## Claims

1. A switching apparatus for grounding a photovoltaic inverter (3) that converts a direct current voltage into an alternative current voltage at mains frequency, with an inverter housing (7) and with a safety fuse (8) that connects a positive or a negative direct current voltage of a photovoltaic generator (2) to a grounding terminal,
**characterized In**
- **that** a safety fuse (8), which is accessible and can be plugged from the outside, is arranged on said inverter housing (7) and can be contacted to a positive or negative direct current voltage in such a manner that either a positive or a negative direct current voltage is grounded through said safety fuse (8),
- **that** the safety fuse (8) is disposed in a plug connector part (9) with at least three plug connectors (11, 12, 13) adapted to be plugged outside of the inverter housing (7) and is mounted between two of said connectors, at least three mating contacts (14, 15, 16) corresponding to said plug connector part (9) being provided on said inverter housing (7), namely for the positive direct current voltage, the negative direct current voltage and for the earth connection, said plug connector part (9) being configured to selectively connect one of the positive and the negative direct current voltage to ground,
- **that** the plug connector part (9) comprises an electrical and/or mechanical plug coding (24, 25, 26; 23).

2. The switching apparatus as set forth in claim 1,
**characterized in**
**that** the safety fuse (8) is embedded in a cup-like part (17) carrying the three plug connectors (11, 12, 13).

3. The switching apparatus as set forth in claim 1,
**characterized in**
**that** the electric coding incorporates contacts (25, 26) as well as a diode (24) in order to detect whether the grounding is positive or negative.

## Revendications

1. Dispositif de commutation pour la mise à la terre d'un onduleur photovoltaïque (3) qui transforme une tension continue en une tension alternative à la fréquence du réseau, et qui comporte un boîtier d'onduleur (7) et un fusible (8) qui relie une tension continue positive ou négative d'un générateur photovoltaïque (2) à une connexion de terre,
**caractérisé**
- **en ce qu'**un fusible accessible de l'extérieur et pouvant être enfiché de l'extérieur, et qui peut être sélectivement connecté à une tension continue positive ou à une tension négative de manière que, soit une tension continue positive, soit une tension continue négative est mise à la terre par l'intermédiaire du fusible (8), est combiné au boîtier de l'onduleur (7),
- **en ce que** le fusible (8) est disposé dans une pièce de contact enfichable (9), qui peut être enfichée à l'extérieur du boîtier de l'onduleur (7), qui comporte au moins trois contacts enfichables (11, 12, 13) et est connectée entre deux des contacts, au moins trois contacts conjugués (14, 15, 16) correspondant à la pièce de contact enfichable (9), à savoir pour la tension positive, la tension négative et la connexion de terre se trouvant sur le boîtier (7) de l'onduleur, et la pièce de contact enfichable (9) étant réalisée sous une forme permutable de manière que, soit la tension continue positive, soit la tension continue négative est mise à la terre,
- **en ce que** la pièce de contact enfichable (9) comporte un codage électrique et/ou mécanique (24, 25, 26; 23).

2. Dispositif de commutation selon la revendication 1,
**caractérisé**
**en ce que** le fusible (8) est encastré dans une pièce (17) en forme de godet qui porte les trois contacts enfichables (11, 12, 13).

3. Dispositif de commutation selon la revendication 1,
**caractérisé**
**en ce** le codage électrique comporte des contacts (25, 26) ainsi qu'une diode (24) pour reconnaître la mise à la terre positive ou négative.
